# EUROPÄISCHE PATENTANMELDUNG

(11) **EP 1 837 157 A2**
(43) Veröffentlichungstag der Anmeldung: **26.09.2007**
(21) Anmeldenummer: 07004624.8
(22) Anmeldetag: 07.03.2007
(51) Int. Cl.: B29C 49/42, B29C 49/78, B29C 49/06

(54) **Blasmachine sowie Verfahren zum Herstellen von Flaschen oder dergleichen Hohlkörper**

(30) Priorität: 25.03.2006 DE 102006013843
(71) Anmelder: KHS AG, 44143 Dortmund (DE)
(72) Erfinder: Till, Volker, 65719 Hofheim/Taunus (DE)

(57) **Zusammenfassung**

Verfahren und Blasmaschine zum Herstellen von Hohlkörpern, insbesondere Flaschen (2) durch Blasen unter Verwendung von Vorformlingen (3) aus thermoplastischem Kunststoff, mit einer Heizstation (4) zum Vorwärmen der dieser Station zugeführten Vorformlinge (3) sowie mit einer wenigstens eine Blasform (6.1) aufweisenden Blasstation (5), der die in der Heizstation (4) erwärmten Vorformlinge (3) zugeführt werde, wobei, durch Mittel (10), die im Falle einer Störung in der Blasstation (5) und/oder in einem auf die Blasmaschine folgenden Teil einer die Hohlkörper verarbeitenden Anlage bei weiterhin arbeitender Heizstation (4) ein Ausschleusen zumindest eines Teils der erwärmten Vorformlinge (3) bewirken.

## Beschreibung

Die Erfindung bezieht sich auf eine Blasmaschine gemäß Oberbegriff Patentanspruch 1 oder 3 sowie auf ein Verfahren gemäß Oberbegriff Patentanspruch 11 oder 13.

Blasmaschinen zum Herstellen von Flaschen oder dergleichen Hohlkörper unter Verwendung von Vorformlingen aus einem thermoplastischen Kunststoff, beispielsweise aus PET, durch Erhitzen und durch anschließendes Streckblasen (Blasformen) des jeweiligen Vorformlings sind bekannt. Blasmaschinen dieser Art bestehen im Wesentlichen aus einer Heizstation, in der die Vorformlinge unter einer kontrollierten Temperaturführung aufgeheizt werden, sowie aus einer nachgeschalteten Blasstation, in der das Blasformen mit hoher Leistung erfolgt und die hierfür in der Regel aus einem um eine vertikale Maschinenachse umlaufend angetriebenen Rotor oder Blasrad mit einer Vielzahl von Blasformen besteht. Beide Prozessschritte, nämlich das Vorwärmen der Vorformlinge und das anschließende Blasformen sind direkt miteinander gekoppelt. Insbesondere ist auch die Heizstation u.a. hinsichtlich Heizleistung und Förderleistung an die Leistung der Blasstation angepasst.

In der Praxis schließt sich an die Blasmaschine ein weiterer Teil einer Gesamtanlage an, d.h. beispielsweise an eine Blasmaschine zum Herstellen von Flaschen eine Füllmaschine, die dann z.B. mit der Blasmaschine unmittelbar verblock sein kann. Nachteilig ist bisher insbesondere auch bei Blasmaschinen zum Herstellen von Flaschen, dass bei einem Stillstand oder einer Störung im nachgeschalteten Teil einer Gesamtanlage bzw. in der nachgeschalteten Maschine die Blasmaschine solange weiterlaufen muss, bis die Heizstation bzw. ein dortiges, die Vorformlinge durch die Heizstation bewegendes Transportelement und auch die Blasformen der Blasstation vollständig entleert sind. Die Menge der hierbei betroffenen Vorformlinge und Flaschen entspricht durchaus derjenigen Menge an Vorformlingen bzw. Flaschen, die normalerweise in einem zweiminütigen störungsfreien Betrieb einer Blasmaschine verarbeitet bzw. hergestellt werden. Die bei diesem Leerlaufen der Maschine erzeugten Flaschen müssen ausgeschleust und verworfen werden, wenn derartige Flaschen mangels geeigneter Sortiersysteme nicht weiter verwendet werden können. Auch ein Puffern der beim Leerlaufen der Blasmaschine erzeugten Flaschen in separaten Puffersystemen ist schon deswegen nicht möglich, weil die durch Blasformen hergestellten Flaschen äußerst empfindlich sind, insbesondere leicht beschädigt und/oder deformiert werden können, so dass sie dann für eine Weiterverwendung nicht mehr geeignet sind.

Störungen in einem auf die Blasmaschine erfolgenden Teil einer Gesamtanlage oder in einer nachgeschalteten Maschine können sehr vielfältig sein, beispielsweise bedingt durch fehlende Betriebsmedien, fehlendes abzufüllendes Produkt in einer nachfolgenden Füllmaschine, Staus in anschließenden Transportsystemen, mechanische oder elektrische Fehler in komplexen Steuersystemen usw. Das bisher bei einem Stillstand oder bei Fehlern notwendige Leerlaufen sowohl der Heizstation als auch der Blasstation verursacht u.a. erhebliche Materialkosten, die sich bei Maschinen oder Anlagen höherer Leistung und bei Dauerbetrieb durchaus zu einem sechsstelligen Euro-Betrag summieren können.

Aufgabe der Erfindung ist es, eine Blasmaschine zum Herstellen von Flaschen oder dergleichen Hohlkörpern durch Blasen aufzuzeigen, die den vorgenannten Nachteil vermeidet. Zur Lösung dieser Aufgabe ist eine Blasmaschine entsprechend dem Patentanspruch 1 oder 3 ausgebildet. Ein Verfahren zum Herstellen von Flaschen oder dergleichen Hohlkörpern ist Gegenstand des Patentanspruches 11 oder 13.

Weiterbildungen der Erfindung sind Gegenstand der Unteransprüche. Die Erfindung wird im Folgenden anhand der Figuren, die jeweils in vereinfachter schematischer Darstellung zwei unterschiedliche Blasmaschinen zum Herstellen von Kunststoff-Flaschen aus Vorformlingen (preforms) durch Streckblasen zeigen, näher erläutert.

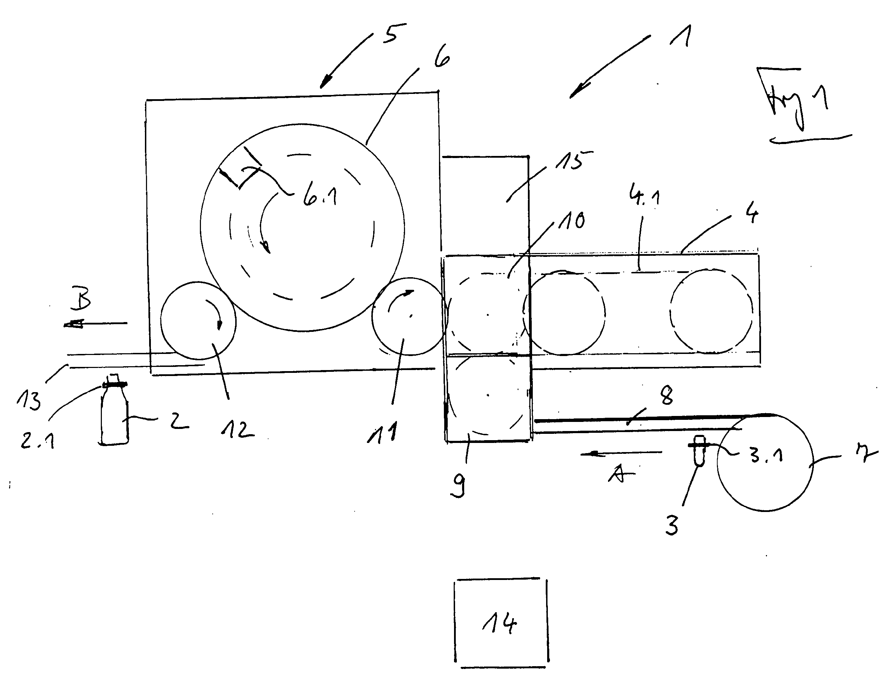

Die in der Figur 1 allgemein mit 1 bezeichnete Blasmaschine dient zum Herstellen von Flaschen 2 aus thermoplastischem Kunststoff, beispielsweise von PET-Flaschen, aus Vorformlingen 3. Die Blasmaschine 1 umfasst hierfür u.a. einen Ofen bzw. eine Heizstation 4, in der die Vorformlinge 3 soweit erwärmt werden, dass sie für das anschließende Streckblasen die notwendige Temperatur, beispielsweise eine Temperatur von ca. 135° C aufweisen, sowie eine Blasstation 5 mit einem um eine vertikale Maschinenachse umlaufend antreibbaren Rotor oder Blasrad 6, an dessen Umfang mehrere Blasformen 6.1 vorgesehen sind, in denen dann jeweils ein Vorformling 3 durch Blasen zu einer Flasche 2 geformt wird.

Im Einzelnen werden während eines ungestörten Betriebes der Blasmaschine 1 die Vorformlinge 3 von einer Versorgungseinheit 7 kontinuierlich über eine Förderstrecke oder Zuführung 8 entsprechend dem Pfeil A der Figur 1 zugeführt. Die Versorgungseinheit 7 besitzt u.a. einen Aufnahmebehälter, in welchem die Vorformlinge 3 als ungeordnete Menge aufgenommen sind und aus welchem die Vorformlinge 3 jeweils in einer vorgegebenen Orientierung an die Zuführung 8 übergeben werden. In der Zuführung 8 sind die Vorformlinge 3 beispielsweise an einem überstehenden Flanschbereich 3.1 in einer Führungsschiene hängend gehalten und werden mit Förderluft in Förder- oder Transportrichtung A bewegt, und zwar an eine Eingabe 9 der Heizstation 4. Von der Eingabe 9 gelangen die Vorformlinge 3 an ein Transportelement 4.1, mit dem sie jeweils nacheinander durch die Heizstation 4 an eine Ausgabe oder Übergabe 10 bewegt werden. Diese weist beispielsweise wenigstens einen umlaufend angetriebenen Transportstern oder ein entsprechendes Transportrad für die erhitzten Vorformlinge 3 auf und ist mit einer Weichenfunktion ausgebildet. Das Transportelement 4.1 ist beispielsweise eine endlos umlaufenden Transportkette, an der in einem vorgegebenen Maschinenabstand Aufnahmen für die Vorformlinge 3 vorgesehen sind. Das Erhitzen der Vorformlinge 3 in der Heizstation 4 erfolgt beispielsweise durch Infrarot-Heizstrahler.

An die Übergabe 10 schließt sich ein umlaufend angetriebener Einlauf- oder Transportstern 11 der Blasstation 5 an. Im störungsfreien Betrieb werden die erwärmten Vorformlinge 3 über diesen Transportstern 11 jeweils nacheinander an eine Blasform 6.1 des umlaufend angetriebenen Blasrades 6 übergeben. Die hergestellten Flaschen 2 verlassen die Blasstation 5 bzw. die Blasmaschine 1 über einen Auslaufstern und eine anschließende Transportstrecke 13, an der die Flaschen 2 mit einem von dem Flanschabschnitt 3.1 gebildeten und der jeweiligen Flaschenmündung benachbarten Flansch 2.1 hängend in einer Führungsschiene gehalten und durch Förderluft in Transportrichtung B einer nicht dargestellten nachgeschalteten Maschine, z.B. Füllmaschine zugeführt werden.

Um bei einer Störung in der nachgeschalteten Maschine den Materialverlust möglichst gering zu halten und um nach Behebung einer Störung möglichst ohne Zeitverzögerung an dem Auslass der Blasmaschine 1, d.h. am dortigen Auslaufstern 12 wieder Flaschen 2 für die weitere Verwendung bereitzustellen, ist bei der in der Figur 1 dargestellten Ausführungsform die Übergabe 10 so ausgebildet, dass sie gesteuert durch eine Steuereinrichtung 14 bei einer Störung in der nachgeschalteten Maschine und/oder bei einem z.B. durch eine solche Störung bedingten Flaschenstau in der Transportstrecke 13 die Weitergabe der erwärmten Vorformlinge 3 an die Blasstation 5 stoppt und bei weiterhin in Betrieb befindlicher Heizstation 4 -welche auch im beschriebenen Störungsfall weiterhin mit Vorformlingen bestückt wird -, die erwärmten Vorformlinge kontinuierlich ausschleust und an einen Puffer 15 weiterleitet. Dieser Puffer 15 ist im einfachsten Fall von einem Auffangbehälter gebildet. Die dort gesammelten Vorformlinge 3 können dann zur erneuten Verwendung in die Vorsorgungseinheit 7 bzw. in den dortigen Aufnahmebehälter eingebracht werden. Zwischen der Übergabe 10 und dem Puffer 15 ist beispielsweise eine Kühlstrecke vorgesehen, so dass die ausgeschleusten Vorformlinge 3 abgekühlt und damit ohne die Gefahr einer Vorformung in den Puffer 15 oder Auffangbehälter gelangen.

Der Vorteil der Blasmaschine 1 besteht darin, dass bei einer Störung in der nachgeschalteten Maschine lediglich die Blasformen 6.1 leergefahren und die hierbei noch erzeugten Flaschen z.B. ausgeschleust werden müssen, dass aber die Heizstation 4 bzw. das dortige Transportelement 4.1 weiterhin voll mit Vorformlingen 3 bestückt sind, so dass nach dem Beheben einer Störung die Blasstation 5 wieder über die Übergabe 10 und den Einlaufstern 11 ohne zeitliche Verzögerung mit erwärmten Vorformlingen 3 versorgt wird.

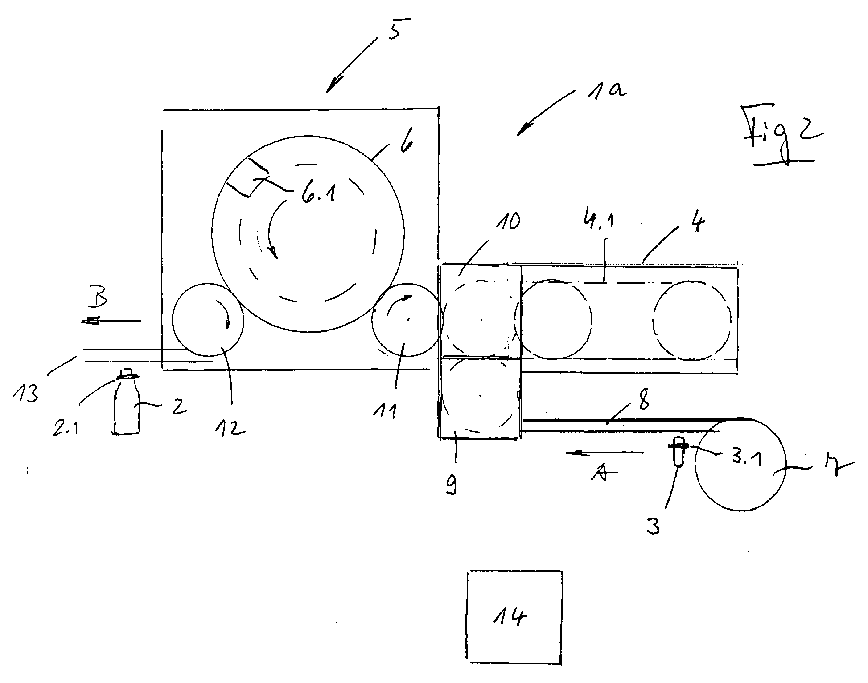

Die Figur 2 zeigt in schematischer Darstellung eine Blasmaschine 1a, die sich von der Blasmaschine 1 im Wesentlichen dadurch unterscheidet, dass im Falle einer Störung der nachgeschalteten Maschine, beispielsweise der nachgeschalteten Füllmaschine, und/oder im Falle eines Flaschenstaus am Transporteur 13 gesteuert durch die Steuereinrichtung 14 die Zuführung der Vorformlinge 3 an die Heizstation 4 gestoppt wird und zugleich die Übergabe 10 die Weitergabe der erwärmten Vorformlinge 3 an die Blasstation 5 unterbricht, so dass die in der Heizstation 4 befindlichen Vorformlinge 3 bis zur Behebung der Störung mit dem dortigen Transportelement 4.1 in der Heizstation 4 umlaufen bzw. kreisen. Um dabei ein Überhitzen der Vorformlinge 3 zu vermeiden, wird die Heizleistung der Heizstation 4 reduziert und/oder die Transportstrecke, auf der die Vorformlinge 3 durch die Heizstation 4 bewegt werden, wird zumindest teilweise mit Kühlluft beaufschlagt. Die Reduzierung der Heizleistung und/oder die Beaufschlagung der Transportstrecke mit Kühlluft erfolgen aber so, dass zumindest nach Behebung einer Störung solche Vorformlinge 3, die bei dem Umlauf in der Heizstation 4 die Übergabe 10 erreichen, die für das Blasformen erforderliche Temperatur besitzen. Bei Behebung einer Störung kann somit das Blasformen der Flaschen 2 wiederum ohne Zeitverzögerung fortgesetzt werden.

Sowohl bei der Blasmaschine 1 als auch bei der Blasmaschine 1 a wird im Falle einer Störung die Blasstation 5 leer gefahren und die hierbei anfallenden Flaschen 1 werden dann beispielsweise verworfen. Während der Störung und Wartezeit wird aber die Nenn- oder Arbeitstemperatur der Blasformen 6.1 aufrechterhalten.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, die Blasmaschine 1 so auszubilden, dass die im Falle einer Störung an der Übergabe 10 ausgeschleusten Vorformlinge 3 über einen Pufferspeicher und über ein Transportsystem zur erneuten Verwendung an die Versorgungseinheit 7 oder aber an einen zweiten Eingang der als Zusammenführung ausgebildeten Eingabe 9 weitergeleitet werden.

Weiterhin ist es auch möglich, bei der Blasmaschine 1 während einer Störung die Heizleistung der Heizstation zu reduzieren und/oder die Transportstrecke auf der die Vorformlinge 3 durch die Heizstation 4 bewegt werden mit Kühlluft zu beaufschlagen.

Ebenfalls ist es im Störungsfall möglich, Preforms, welche bereits innerhalb der Heizvorrichtung 4 befinden, an mindestens einer Stelle der innerhalb der Heizstation 4 angeordneten Transportstrecke auszuschleusen. Diese Vorgehensweise ist von besonderem Vorteil, da gewisse Arten von Preforms in Abhängigkeit von Material, geometrischer Gestalt ab einer bestimmten Temperatur ein an sich unerwünschtes Kristallisationsverhalten zeigen. Da ein solcher Kristallisationsprozess erst bei Überschreiten einer bestimmten Grenztemperatur beginnt, kann dieser dadurch sicher verhindert werden, dass die Preform an einer Stelle der Heizstation bzw. zu einem solchen Zeitpunkt aus der Heizstation 4 ausgeschleust werden, an welcher bzw. zu dem die Preforms noch eine Temperatur aufweisen, die unterhalb der Grenztemperatur liegt.

Im Rahmen der vorliegenden Anmeldung ist unter dem Begriff Grenztemperatur nicht nur die Temperatur zu verstehen, bei welcher der Kristallisationsprozess beginnt, sonder auch eine solche Temperatur, bei welcher die Kristallisationsgeschwindigkeit, bzw. der Kristallisationsgrad des Preforms unerwünschte Werte erreicht hat.

### Bezugszeichenliste

- 1, 1a: Blasmaschine
- 2: Flasche
- 2.1: Flansch
- 3: Vorformling
- 3.1: Flansch
- 4: Heizstation
- 4.1: Transportelement
- 5: Ladestation
- 6: umlaufendes Blasrad
- 6.1: Blasform
- 7: Versorgungseinheit
- 8: Transporteur
- 9: Eingabestation
- 10: Übergabe
- 11: Einlaufstern
- 12: Auslaufstern
- 13: Transporteur
- 14: Steuereinrichtung
- 15: Puffer oder Auffangbehälter
- A: Förderrichtung der Vorformlinge 3
- B: Förderrichtung der Flaschen 2

## Patentansprüche

1. Blasmaschine zum Herstellen von Hohlkörpern, insbesondere Flaschen (2) durch Blasen unter Verwendung von Vorformlingen (3) aus thermoplastischem Kunststoff, mit einer Heizstation (4) zum Vorwärmen der dieser Station zugeführten Vorformlinge (3) sowie mit einer wenigstens eine Blasform (6.1) aufweisenden Blasstation (5), der die in der Heizstation (4) erwärmten Vorformlinge (3) zugeführt werden, **gekennzeichnet, durch** Mittel (10), die im Falle einer Störung in der Blasstation (5) und/oder in einem auf die Blasmaschine folgenden Teil einer die Hohlkörper verarbeitenden Anlage bei weiterhin arbeitender Heizstation (4) ein Ausschleusen zumindest eines Teils der erwärmten Vorformlinge (3) bewirken.

2. Blasmaschine nach Anspruch 1, **gekennzeichnet durch** Mittel (9, 10), die im Falle einer Störung in der Blasstation (5) und/oder in einem auf die Blasmaschine folgenden Teil einer die Hohlkörper verarbeitenden Anlage bei weiterhin arbeitender Heizstation (4) die Zufuhr der Vorformlinge (3) an die Heizstation (4) sowie die Übergabe von Vorformlingen (3) aus der Heizstation (4) an die Blasstation (5) sperren.

3. Blasmaschine zum Herstellen von Hohlkörpern, insbesondere Flaschen (2) durch Blasen unter Verwendung von Vorformlingen (3) aus thermoplastischem Kunststoff, mit einer Heizstation (4) zum Vorwärmen der dieser Station zugeführten Vorformlinge (3) sowie mit einer wenigstens eine Blasform (6.1) aufweisenden Blasstation (5), der die in der Heizstation (4) erwärmten Vorformlinge (3) zugeführt werden, **gekennzeichnet durch** Mittel (9, 10), die im Falle einer Störung in der Blasstation (5) und/oder in einem auf die Blasmaschine folgenden Teil einer die Hohlkörper verarbeitenden Anlage bei weiterhin arbeitender Heizstation (4) die Zufuhr der Vorformlinge (3) an die Heizstation (4) sowie die Übergabe von Vorformlingen (3) aus der Heizstation (4) an die Blasstation (5) sperren.

4. Blasmaschine nach Anspruch 3, **gekennzeichnet, durch** Mittel (10), die im Falle einer Störung in der Blasstation (5) und/oder in einem auf die Blasmaschine folgenden Teil einer die Hohlkörper verarbeitenden Anlage bei weiterhin arbeitender Heizstation (4) ein Ausschleusen zumindest eines Teils der erwärmten Vorformlinge (3) bewirken.

5. Blasmaschine nach einem der vorhergehenden Ansprüche, **gekennzeichnet durch** eine zwischen einem Auslass der Heizstation (4) und einem Einlass der Blasstation (5) angeordnete Übergabe (10), die derart steuerbar ist, dass sie im Falle einer Störung die Weitergabe der erwärmten Vorformlinge (3) an die Blasstation (5) unterbricht.

6. Blasmaschine nach Anspruch 5, **dadurch gekennzeichnet, dass** die Übergabe (10) die erwärmten Vorformlinge (3) ausschleust, beispielsweise an einen Puffer (15) oder Auffangbehälter.

7. Blasmaschine nach Anspruch 5, **dadurch gekennzeichnet, dass** die Übergabe (10) im Falle einer Störung die Heizstation (4) für die Abgabe der Vorformlinge (3) an die Blasstation (5) sperrt.

8. Blasmaschine nach einem der vorhergehenden Ansprüche, **dadurch gekennzeichnet, dass** die Heizstation (4) wenigstens ein endlos umlaufend antreibbares Transportelement (4.1) für die Vorformlinge (3) aufweist.

9. Blasmaschine nach einem der vorhergehenden Ansprüche, **dadurch gekennzeichnet, dass** die Blasstation (5) wenigstens ein um eine vertikale Maschinenachse umlaufend antreibbaren Rotor (6) mit mehreren am Rotorumfang vorgesehenen Blasformen (6) aufweist.

10. Blasmaschine nach einem der vorhergehenden Ansprüche, **dadurch gekennzeichnet, dass** sie mit einer nachfolgenden Maschine, vorzugsweise mit einer nachfolgenden Füllmaschine verblockt ist.

11. Verfahren zum Herstellen von Flaschen (2) oder dergleichen Hohlkörper durch Blasformen unter Verwendung von Vorformlingen (3) aus thermoplastischem Kunststoff, wobei die Vorformlinge (3) in einer Heizstation (4) erwärmt und im erwärmten Zustand in einer Blasform (6.1) einer Blasstation (5) in den jeweiligen Hohlkörper verformt werden, **dadurch gekennzeichnet, dass** im Falle einer Störung der Blasstation (5) und/oder eines auf die Blasmaschine (1, 1a) folgenden Teils einer die Hohlkörper verarbeitenden Anlage die Weitergabe der erwärmten Vorformlinge (3) an die Blasstation unterbrochen und die Vorformlinge (3) für eine erneute Verwendung zumindest teilweise ausgeschleust werden.

12. Verfahren nach Anspruch 11, **dadurch gekennzeichnet, dass** im Falle einer Störung die Vorformlinge (3) zumindest teilweise in der Heizstation (4) zurückbehalten bzw. auf einer in sich geschlossenen Warteschleife innerhalb der Heizstation (4) bewegt werden.

13. Verfahren zum Herstellen von Flaschen (2) oder dergleichen Hohlkörper durch Blasformen unter Verwendung von Vorformlingen (3) aus thermoplastischem Kunststoff, wobei die Vorformlinge (3) in einer Heizstation (4) erwärmt und im erwärmten Zustand in einer Blasform (6.1) einer Blasstation (5) in den jeweiligen Hohlkörper verformt werden, **dadurch gekennzeichnet, dass** im Falle einer Störung die Vorformlinge (3) zumindest teilweise in der Heizstation (4) zurückbehalten bzw. auf einer in sich geschlossenen Warteschleife innerhalb der Heizstation (4) bewegt werden.

14. Verfahren nach Anspruch 13, **dadurch gekennzeichnet, dass** im Falle einer Störung der Blasstation (5) und/oder eines auf die Blasmaschine (1, 1a) folgenden Teils einer die Hohlkörper verarbeitenden Anlage die Weitergabe der erwärmten Vorformlinge (3) an die Blasstation unterbrochen und die Vorformlinge (3) für eine erneute Verwendung zumindest teilweise ausgeschleust werden.

15. Verfahren nach einem der vorhergehenden Ansprüche, **dadurch gekennzeichnet, dass** das Ausschleusen der Vorformlinge (3) an einen Puffer (15) oder Aufnahme-oder Sammelbehälter erfolgt.

16. Verfahren nach einem der vorhergehenden Ansprüche, **dadurch gekennzeichnet, dass** im Falle einer Störung die Vorformlinge (3) auf wenigstens einem endlos umlaufend angetriebenen Transportelement (4.1) der Heizstation (4) bewegt werden.

17. Verfahren nach einem der vorhergehenden Ansprüche, **dadurch gekennzeichnet, dass** im Falle einer Störung die Heizleistung der Heizstation (4) reduziert wird und/oder dass die Transportstrecke, auf der die Vorformlinge (3) durch die Heizstation bewegt werden mit Kühlluft beaufschlagt wird.

18. Verfahren nach einem der vorhergehenden Ansprüche, dass im Falle einer Störung die Blasstation (5) leer gefahren wird und während der Störung bzw. während der Wartezeit bis zur Behebung der Störung die wenigstens eine Blasform (6.1) auf Nenn- und Arbeitstemperatur gehalten wird.
